# EUROPEAN PATENT APPLICATION

(11) **EP 4 495 699 A1**
(43) Date of publication of application: **22.01.2025**
(21) Application number: 24189373.4
(22) Date of filing: 18.07.2024
(51) Int. Cl.: G03G 15/16, C08G 63/183, C08L 67/02

(54) **ELECTROPHOTOGRAPHIC MEMBER, ELECTROPHOTOGRAPHIC IMAGE FORMING APPARATUS, AND ELECTRICALLY CONDUCTIVE RESIN COMPOSITION**

(30) Priority: 19.07.2023 JP 2023117836; 24.06.2024 JP 2024101245
(71) Applicant: CANON KABUSHIKI KAISHA, Tokyo 146-8501 (JP)
(72) Inventor: TAKENAGA, Masahiro, Tokyo, 146-8501 (JP)
(74) Representative: TBK

(57) **Abstract**

An electrophotographic member, wherein the electrophotographic member comprises a resin layer, the resin layer is electrically conductive, the resin layer comprises an aromatic ring-containing polyester and a fluorosulfonylimide anion and a double bond-containing cation, and the aromatic ring-containing polyester is a polyester selected from the group consisting of polyesters of the following (i) to (iv) or a mixture of two or more polyesters selected from the group consisting of polyesters of the following (i) to (iv):
(i) polyethylene naphthalate,
(ii) polyethylene terephthalate,
(iii) modified polyethylene terephthalate in which the proportion of acid monomer unit other than terephthalic acid unit is 6 mol % or less in all acid monomer unit; and,
(iv) modified polyethylene naphthalate in which the proportion of acid monomer unit other than naphthalenedicarboxylic acid unit is 6 mol % or less in all acid monomer unit.

## Description

### BACKGROUND OF THE INVENTION

### Field of the Invention

The present disclosure relates to an electrophotographic member, an electrophotographic image forming apparatus, and an electrically conductive resin composition.

### Description of the Related Art

Japanese Patent Application Publication No. 2014-132329 discloses an electrically conductive belt for electrophotography, which is obtained by using an ionic conducting agent that contains a perfluoroalkylsulfonylimide anion as an anion.

### SUMMARY OF THE INVENTION

In recent years, regulations have been considered for perfluoroalkyl and polyfluoroalkyl substances (also referred to as "PFAS" hereinafter), which are said to exhibit high environmental persistence and bioaccumulation potential. As a result, the inventors of the present invention investigated ionic conducting agents which do not have a C-F bond in the molecule and contain a bis(fluorosulfonyl)imide anion (also referred to as an "FSI anion" hereinafter), and which are not classed as PFAS. Japanese Patent Application Publication No. 2020-024404 discloses use of an FSI anion in an electrophotographic member. Specifically, example 6 in Japanese Patent Application Publication No. 2020-024404 discloses a developing blade in which an FSI anion and a cation containing a long chain alkyl group are used.

According to investigations by the inventors of the present invention, an electrophotographic member having a resin layer that is rendered electrically conductive through the use of an ionic conducting agent containing an FSI anion (also referred to as an "FSI ionic conducting agent" hereinafter) tends to undergo a decrease in electrical conductivity during long-term use more readily than a case where an ionic conducting agent containing a trifluoromethanesulfonylimide (TFSI) anion is used.

At least one aspect of the present disclosure intends to provide an electrophotographic member in which a decrease in electrical conductivity is unlikely to occur even during long-term use in an environment in which a high voltage is applied. In addition, at least one embodiment of the present disclosure intends to provide an electrophotographic image forming apparatus in which high quality electrophotographic images can be stably formed even if the apparatus is used for a long time. Furthermore, at least one aspect of the present disclosure intends to provide an electrically conductive resin composition in which a decrease in electrical conductivity is unlikely to occur even if electrification is carried out for a long time.

At least one aspect of the present disclosure provides an electrophotographic member as specified in claims 1 to 11.

At least one aspect of the present disclosure provides an electrophotographic image forming apparatus as specified in claim 12.

At least one aspect of the present disclosure provides an electrically conductive resin composition as specified in claim 13.

At least one aspect of the present disclosure can provide an electrophotographic member in which a decrease in electrical conductivity is unlikely to occur even during long-term use in an environment in which a high voltage is applied. In addition, at least one embodiment of the present disclosure can provide an electrophotographic image forming apparatus in which high quality electrophotographic images can be stably formed even if the apparatus is used for a long time. Furthermore, at least one aspect of the present disclosure can provide an electrically conductive resin composition in which a decrease in electrical conductivity is unlikely to occur even if electrification is carried out for a long time.

Further features of the present invention will become apparent from the following description of exemplary embodiments with reference to the attached drawings.

### BRIEF DESCRIPTION OF THE DRAWINGS

FIGS. 1A and AB are diagrams that explains ionic dissociation in a resin layer according to one aspect of the present disclosure;
FIG. 2 is a cross-sectional schematic view that illustrates one example of an electrophotographic image forming apparatus; and
FIGS. 3A to 3D are diagrams that explains the configuration of an electrophotographic belt according to one aspect of the present disclosure.

### DESCRIPTION OF THE EMBODIMENTS

In the present disclosure, the terms "from XX to YY" and "XX to YY", which indicate numerical ranges, mean numerical ranges that include the lower limits and upper limits that are the end points of the ranges. In cases where numerical ranges are indicated incrementally, upper limits and lower limits of the numerical ranges can be arbitrarily combined. In addition, the units "Ω/□" for surface resistivity mean "Q/square". In the present disclosure, wording such as "at least one type selected from the group consisting of XX, YY and ZZ" means any of: XX; YY; ZZ; a combination of XX and YY; a combination of XX and ZZ; a combination of YY and ZZ; or a combination of XX and YY and ZZ.

As mentioned above, an electrophotographic member having a resin layer that is rendered electrically conductive through the use of an ionic conducting agent containing an FSI anion (also referred to as an "FSI ionic conducting agent" hereinafter) tends to undergo a decrease in electrical conductivity during long-term use more readily than a case where an ionic conducting agent containing a trifluoromethanesulfonylimide (TFSI) anion is used. It is surmised that the reason why the electrical conductivity of the resin layer tends to decrease when rendered electrically conductive using an FSI ionic conducting agent is because the FSI anion has a small molecular size due to not having a perfluoroalkyl group.

Japanese Patent Application Publication No. 2020-024404 indicates that movement of ions can be suppressed as a result of entanglement between ions and molecular chains of the matrix resin. In view of the invention disclosed in Japanese Patent Application Publication No. 2020-024404, the inventors of the present invention investigated combinations of FSI anions and imidazolium cations bonded to C9-C20 long chain alkyl groups in order to suppress movement of FSI. However, even by combining in this way, the advantageous effect of preventing a decrease in electrical conductivity over time was extremely limited in the case of an electrophotographic member to which a high-voltage is applied, such as an intermediate transfer belt.

In an electrophotographic member to which a high-voltage is applied, even if an FSI anion is combined with an imidazolium cation bonded to a C9-C20 long chain alkyl group, it is surmised that movement of the FSI anion, which has a small molecular size, cannot be sufficiently prevented. Therefore, the imidazolium cation moves to the negative electrode side, the FSI anion moves to the positive electrode side, and imidazolium cations and FSI anions that reach electrodes lose charge by being reduced and oxidized respectively. Electrical conductivity derived from an ionic conducting agent is proportional to the number of carrier ions, which are bearers of electrical conductivity. That is, because electrical resistivity is the inverse of electrical conductivity, some carrier ions lose charge if a voltage is applied for a long time. As a result, the number of carrier ions decreases, which is thought to lead to an increase in electrical resistivity.

As a result, the inventors of the present invention carried out investigations in order to obtain an electrically conductive resin layer in which changes in electrical conductivity over time can be prevented even if a voltage is applied, with the investigations being carried out on the assumption that an FSI anion is used. As a result, the inventors of the present invention found that a resin layer containing an FSI anion, an aromatic ring-containing polyester and a double bond-containing cation was effective for achieving the objective mentioned above.

The reason why the resin layer mentioned above can suppress changes in electrical conductivity over time even if a high voltage is applied is thought by the inventors of the present invention to be as follows.

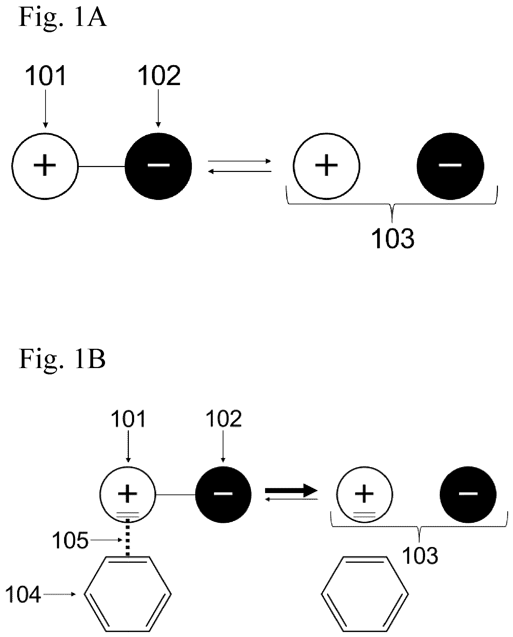

It is thought that a resin layer which is imparted with electrical conductivity by an ionic conducting agent is generally in a state of equilibrium between a form of a salt of a cation 101 and an anion 102 and a form in which the cation 101 and the anion 102 dissociate to form carrier ions (103), as shown in FIG. 1A. That is, some of the ionic conducting agent does not dissociate and does not contribute to electrical conductivity.

Meanwhile, in the resin layer according to the present disclosure, π-π interactions (105) between a π electron in an aromatic ring (104) of the aromatic ring-containing polyester and an π electron in the double bond-containing cation (101) lead to a state in which a cation-anion (102) bond is weakened and ionic dissociation readily occurs, as shown in FIG. 1B. That is, the state of equilibrium shifts towards an increase in the number of carrier ions.

In addition, even if cations and anions move in the resin layer and lose charge, meaning that the number of carrier ions decreases and the state of equilibrium is broken, as described above, rapid ionic dissociation occurs in order to maintain the state of equilibrium. Therefore, the number of carrier ions is unlikely to change even if application of a voltage is continued. As a result, it is thought that it is possible to form a resin layer in which changes in electrical conductivity are suppressed even in long term use.

Embodiments of the electrophotographic member of the present disclosure will now be explained in detail. Moreover, the present disclosure is in no way limited to the embodiments given below.

### Electrophotographic Member

An electrophotographic member according to one aspect of the present disclosure has a resin layer having an aromatic ring-containing polyester, a fluorosulfonylimide anion and a double bond-containing cation. The resin layer is electrically conductive. The resin layer may contain additives and so on other than these components as long as the advantageous effect of the present disclosure is not impaired.

The form of the electrophotographic member is not particularly limited. That is, an electrophotographic member according to one embodiment of the present disclosure can be a belt having an endless form (also referred to as an "electrophotographic belt" hereinafter) or an electrophotographic roller having a roll-like form. The electrophotographic member is preferably an electrophotographic belt, and more preferably an intermediate transfer belt.

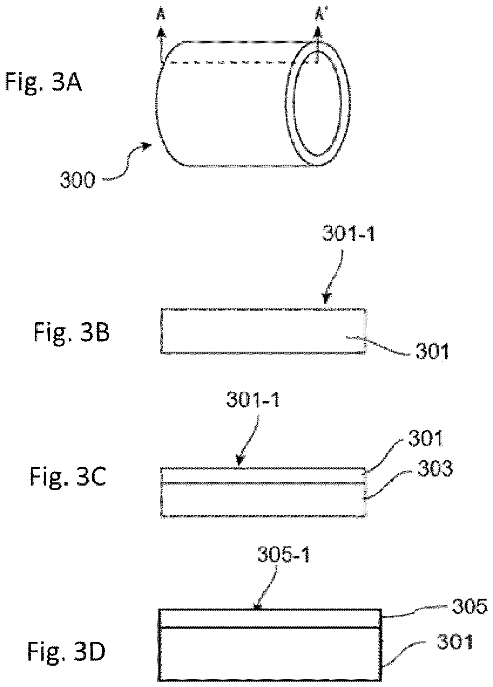

FIG. 3A shows a perspective view of an electrically conductive belt 300 as an example of an electrophotographic member according to one aspect of the present disclosure.

An example of a layer configuration is a single layer structure in which a cross section along the line A-A' in FIG. 3A is formed from only a resin layer 301, as shown in FIG. 3B. In this case, the outer surface 301-1 of the resin layer is, for example, a surface for supporting unfixed toner in a case where the electrically conductive belt is used as an intermediate transfer belt, that is, forms the outer surface of the electrically conductive belt.

Another example is a configuration having a layer structure in which a cross section along the line A-A' has a base layer 303 and a resin layer 301 that covers the outer peripheral surface of the base layer, as shown in FIG. 3C. In this configuration, the outer surface 301-1 of the resin layer 301 on the opposite side from the base layer 303 forms the outer surface of the electrically conductive belt.

Another example is a configuration having a layer structure in which a cross section along the line A-A' has a resin layer 301 and a surface layer 305 that covers the outer peripheral surface of the resin layer, as shown in FIG. 3D. In this configuration, the outer surface 305-1 of the surface layer 305 on the opposite side from the resin layer 301 forms the outer surface of the electrically conductive belt.

Another example is a configuration (not shown) having a back surface layer that covers the inner peripheral surface of an electrically conductive belt having a configuration shown in FIGS. 3B, 3C or 3D.

### Resin Layer

The thickness of the resin layer is not particularly limited, but when the electrophotographic member is used as an intermediate transfer belt, this thickness is, for example, preferably from 10 µm to 700 µm, and more preferably from 50 µm to 120 µm. By making the thickness of the resin layer fall within the range mentioned above, it is possible to ensure strength, flexibility, flexing resistance, and so on, required of a member.

The resin layer can be a layer that forms an outer surface of the electrophotographic member (a surface layer). More specifically, in a case where the electrophotographic member is, for example, an intermediate transfer member, the resin layer can be a layer that constitutes the outer surface layer of an intermediate transfer belt, which is a toner image-supporting surface of the intermediate transfer belt. In addition, a treatment agent may be coated on a surface of the resin layer, a surface treatment such as a polishing treatment may be carried out, and a surface layer for protecting a surface of the resin layer may be separately provided.

Materials used in the resin layer will now be explained in detail.

### Aromatic Ring-containing Polyester

The resin layer contains an aromatic ring-containing polyester. The aromatic ring-containing polyester is preferably a matrix resin.

From the perspective of more readily achieving the advantageous effect of promoting ionic dissociation by having a high aromatic ring proportion in the molecule, the aromatic ring-containing polyester is a polyester selected from the group consisting of polyesters of the following (i) to (iv) or a mixture of two or more polyesters selected from the group consisting of polyesters of the following (i) to (iv):
(i) Polyethylene naphthalate,
(ii) Polyethylene terephthalate,
(iii) Modified polyethylene terephthalate in which the proportion of acid monomer units other than terephthalic acid units is 6 mol % or less (for example 0 to 6 mol %) in all acid monomer units; and,
(iv) Modified polyethylene naphthalate in which the proportion of acid monomer units other than naphthalenedicarboxylic acid units is 6 mol % or less (for example 0 to 6 mol %) in all acid monomer units.

The aromatic ring-containing polyester more preferably includes at least one type selected from the group consisting of polyethylene naphthalate, polyethylene terephthalate and modified polyethylene terephthalate. The modified polyethylene terephthalate is preferably an isophthalic acid-modified polyethylene terephthalate and naphthalenedicarboxylic acid -modified polyethylene terephthalate, and is more preferably an isophthalic acid-modified polyethylene terephthalate.

It is more preferable to incorporate at least one type selected from the group consisting of polyethylene naphthalate, polyethylene terephthalate and isophthalic acid-modified polyethylene terephthalate. The aromatic ring-containing polyester is more preferably (i) the polyethylene naphthalate, (ii) the polyethylene terephthalate, or (iii) Modified polyethylene terephthalate wherein the proportion of acid monomer unit other than terephthalic acid unit is 6 mol % or less in all acid monomer unit, and the acid monomer unit other than terephthalic acid unit is isophthalic acid units.

Furthermore, in order to enable an increase in crystallinity and being able to further improve the strength of the resin layer, the aromatic ring-containing polyester more preferably contains at least one polyester selected from the group consisting of polyethylene naphthalate and polyethylene terephthalate. The aromatic ring-containing polyester is still more preferably the polyethylene naphthalate, or the polyethylene terephthalate.

In the present disclosure, the term "monomer unit" describes a reacted form of a monomeric material in a polymer. For example, in the polyester, one monomer unit is provided between ester bonds, and in the calculation of mol %, one monomer unit corresponds to one molecule.

It is possible to use one type of aromatic ring-containing polyester in isolation or a combination of two or more types thereof, and a combination can be a blend or an alloy. In addition, other resins may be added as long as the advantageous effect of the present disclosure is not impaired. Well-known resins can be used as these other resins. For example, a polyether ester amide.

Moreover, a specific example of polyethylene naphthalate is TN-8065S (trade name; produced by Teijin Ltd.). In addition, a specific example of polyethylene terephthalate is "TR-8550FF" (trade name; produced by Teijin Ltd.). In addition, a specific example of an isophthalic acid-modified polyethylene terephthalate is "IP121B" (trade name; produced by Bell Polyester Products, Inc.; a condensation polymer of terephthalic acid, isophthalic acid and ethylene glycol).

From the perspective of maintaining the strength of the electrophotographic member, the content of the aromatic ring-containing polyester in the resin layer is preferably 50.0 to 99.0 mass%, more preferably 60.0 to 98.0 mass%, further preferably 70.0 to 98.0 mass%, and yet more preferably 75.0 to 98.0 mass%, relative to the mass of the resin layer.

### Bis(fluorosulfonylimide) Anion

The resin layer or the like contains a bis(fluorosulfonyl)imide (FSI) anion as an anion. The bis(fluorosulfonyl)imide anion has a structure represented by structural formula below.

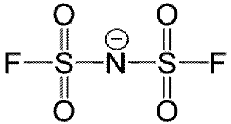

The resin layer may, if necessary, contain anions other than the FSI anion as long as the advantageous effect of the present disclosure is not impaired. However, the resin layer preferably contains the FSI anion as the only anion from the perspective of further reducing the environmental dependence of electrical conductivity of the resin layer.

Here, an anion which does not have a C-F bond in the molecule and is not classed as PFAS is preferably used as another anion able to be used. Examples of anions that are not classed as PFAS include, for example, Cl⁻, Br⁻, I⁻, AlCl₄⁻, N(CN)₂⁻ and anions represented by structural formulae (2) to (4) below.

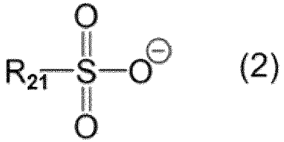

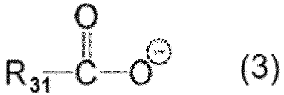

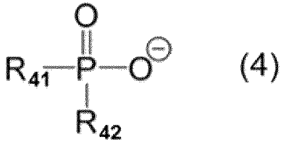

In structural formulae (2) to (4), R₂₁, R₃₁, R₄₁ and R₄₂ each independently denote any group selected from the group consisting of a hydrogen atom, a hydrocarbon group having 1 to 18 carbon atoms and an alkoxy group having 1 to 18 carbon atoms. Examples of hydrocarbon groups include straight chain and branched chain saturated hydrocarbon groups, straight chain and branched chain unsaturated hydrocarbon groups, substituted and unsubstituted saturated alicyclic hydrocarbon groups, substituted and unsubstituted unsaturated alicyclic hydrocarbon groups, and substituted and unsubstituted aromatic hydrocarbon groups.

Preferred examples of R₂₁ include a hydrogen atom, a straight chain or branched chain alkyl group having 1 to 6 carbon atoms (and more preferably 1 to 3 carbon atoms), and a substituted or unsubstituted aryl group, and more specifically an unsubstituted phenyl group or a phenyl group substituted with an alkyl group having 1 to 3 carbon atoms (and more preferably 1 or 2 carbon atoms).

Preferred examples of R₃₁ include an alkyl group having 3 to 15 carbon atoms (and more preferably 6 to 12 carbon atoms).

Preferred examples of R₄₁ and R₄₂ independently include straight chain and branched chain alkyl groups having 3 to 15 carbon atoms (and more preferably 6 to 12 carbon atoms).

Examples of anions represented by structural formula (2) above include at least one type selected from the group consisting of the anions listed below.

Sulfonate ion, methane sulfonate ion, ethane sulfonate ion, 1-butane sulfonate ion, p-toluene sulfonate ion (tosylate ion), 1-octane sulfonate ion, 1-decane sulfonate ion, 1-tetradecane sulfonate ion, 1-octadecane sulfonate ion, hydrogen sulfate ion, methyl sulfate ion, ethyl sulfate ion, 1-butyl sulfate ion, 1-octyl sulfate ion, 1-decyl sulfate ion, 1-tetradecyl sulfate ion and 1-octadecyl sulfate ion. At least one selected from the group consisting of methanoate ion, ethanoate ion, p-toluene sulfonate ion and hydrogen sulfate ion is more preferred.

Examples of anions represented by structural formula (3) above include at least one type selected from the group consisting of the anions listed below.

Methanoate ion, ethanoate ion, butanoate ion, hexanoate ion, benzoate ion, octanoate ion, decanoate ion, dodecanoate ion, tetradecanoate ion, hexadecanoate ion, octadecanoate ion, methyl carbonate ion, ethyl carbonate ion, butyl carbonate ion, hexyl carbonate ion, octyl carbonate ion, decyl carbonate ion, tetradecyl carbonate ion and octadecyl carbonate ion. Decanoate ion is more preferred.

Examples of anions represented by structural formula (4) above include at least one type selected from the group consisting of the anions listed below.

Phosphinate ion, dimethyl phosphinate ion, ethylmethyl phosphinate ion, diethyl phosphinate ion, dibutyl phosphinate ion, bis(2,4,4-trimethylpentyl) phosphinate ion, dioctyl phosphinate ion, ditetradecyl phosphinate ion, dioctyldecyl phosphinate ion, dimethyl phosphate ion, diethyl phosphate ion and dibutyl phosphate ion. At least one selected from the group consisting of diethyl phosphinate ion and bis(2,4,4-trimethylpentyl) phosphinate ion is more preferred, and bis(2,4,4-trimethylpentyl) phosphinate ion is further preferred.

However, the resin layer preferably contains FSI as the only anion from the perspective of further reducing the environmental dependence of electrical conductivity of the resin layer.

### Double Bond-containing Cation

The double bond-containing cation is not particularly limited as long as this cation has a double bond in the molecule. The cation is preferably one that is not classed as PFAS. That is, the cation preferably has no C-F bond in the molecule.

The double bond-containing cation is, for example, preferably a cation having an aromatic heterocyclic structure, and particularly preferably a cation having a nitrogen-containing heterocyclic aromatic ring. Examples of cations having a nitrogen-containing heterocyclic aromatic ring include cations having an imidazolium structure and cations having a pyridinium structure. That is, the double bond-containing cation is preferably at least one type of cation selected from the group consisting of a cation having an imidazolium structure and a cation having a pyridinium structure.

In particular, the double bond-containing cation is more preferably at least one type of cation selected from the group consisting of an imidazolium cation having an imidazolium structure represented by formula (2-1) below and a pyridinium cation having a pyridinium structure represented by formula (2-2).

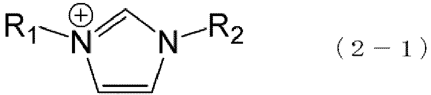

In formula (2-1), R₁ and R₂ each independently denote a hydrogen atom or a hydrocarbon group having 1 to 8 carbon atoms. From the perspective of efficiently bringing about interactions between an imidazolium cation and the aromatic ring-containing polyester, in a case where one selected from the group consisting of R₁ and R₂ is a hydrocarbon group having 5 to 8 carbon atoms (for example, 8 carbon atoms), it is preferable for the other to be a hydrogen atom or a hydrocarbon group having 1 to 4 carbon atoms, more preferably 1 or 2 carbon atoms, and further preferably 1 carbon atom. More preferably, R₁ and R₂ each independently denote a hydrocarbon group having 1 to 4 carbon atoms.

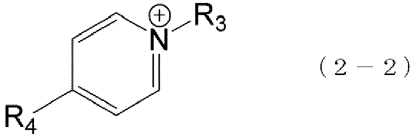

In formula (2-2), R₃ and R₄ each independently denote a hydrogen atom or a hydrocarbon group having 1 to 8 carbon atoms. From the perspective of efficiently bringing about interactions between a pyridinium cation and the double bond-containing polyester, in a case where one selected from the group consisting of R₃ and R₄ is a hydrocarbon group having 5 to 8 carbon atoms (for example, 8 carbon atoms), it is preferable for the other to be a hydrogen atom or a hydrocarbon group having 1 to 4 carbon atoms, more preferably 1 or 2 carbon atoms, and further preferably 1 carbon atom. More preferably, R₃ and R₄ each independently denote a hydrocarbon group having 1 to 4 carbon atoms.

Examples of hydrocarbon groups include straight chain and branched chain saturated hydrocarbon groups, straight chain and branched chain unsaturated hydrocarbon groups, substituted and unsubstituted saturated alicyclic hydrocarbon groups, substituted and unsubstituted unsaturated alicyclic hydrocarbon groups, and substituted and unsubstituted aromatic hydrocarbon groups. The hydrocarbon group is preferably an alkyl group.

Specific examples of imidazolium cations represented by structural formula (2-1) above include those listed below.

A 1-ethyl-3-methylimidazolium cation, a 1-butyl-3-methylimidazolium cation, a 1-hexyl-3-methylimidazolium cation, a 1-octyl-3-methylimidazolium cation and a 1-octyl-3-methylimidazolium cation.

Specific examples of pyridinium cations represented by structural formula (2-2) above include those listed below.

A 1-ethylpyridinium ion, a 1-butylpyridinium ion, a 1-hexylpyridinium ion, a 1-octylpyridinium ion, a 1-(tert-butyl)pyridinium ion, a 1-octyl-4-methylpyridinium ion and a 1-octyl-4-butylpyridinium ion.

Examples of double bond-containing cations not having an aromatic heterocyclic ring structure include compounds in which a group having a vinyl group is bonded to at least one type of atom selected from the group consisting of carbon atoms and nitrogen atoms that constitute a pyrrolidine ring or a piperidine ring.

It is possible to use one of the cations mentioned above in isolation or a combination of two or more types thereof. Moreover, the resin layer or the like may, if necessary, contain a cation not having a double bond in the molecule as long as the advantageous effect of the present disclosure is not impaired. The ionic conducting agent is constituted from a combination of a fluorosulfonylimide anion and one or more of these cations. For example, the resin layer or the like contains an ionic conducting agent including anions and cations mentioned above.

In addition, the content of the ionic conducting agent (the total content of the fluorosulfonylimide anion and the double bond-containing cation) in the resin layer or the like is preferably 0.1 mass% or more relative to the mass of the resin layer. This is in order to more readily impart the resin layer with a prescribed level of electrical conductivity. The upper limit for this content is not particularly limited but is, for example, 15.0 mass% or less. This is because if this content exceeds 15.0 mass%, the electrical conductivity improvement effect is limited even if the resin layer or the like contains the ionic conducting agent.

A preferred range for the content of the ionic conducting agent in the resin layer is from 0.1 mass% to 15.0 mass%. This content value should be selected, as appropriate, within this range according to the electrical conductivity to be exhibited by the resin layer. For example, the content of the ionic conducting agent is more preferably 0.5 to 10.0 mass%, and further preferably 2.0 to 7.0 mass%.

Moreover, it can be assessed whether the ionic conducting agent is present in the resin layer or the like by extracting the ionic conducting agent from the resin layer and carrying out identification. A solvent used for the extraction should be selected from among solvents able to dissolve the ionic conducting agent. A specific example thereof is methanol. If necessary, it is possible to subject the extract liquid to centrifugal separation or isolate the ionic conducting agent by means of liquid chromatography or the like, and then identify anion and cation structures using mass spectrometry or NMR analysis. In addition, the total content of anions and cations in the resin layer can be determined by removing the solvent from the extract liquid and then measuring the mass of dried product. Examples of methods for identifying cation and anion structures and measuring masses thereof will now be given.

200 mg of a sample is cut from a resin layer, immersed in 1 mL of methanol, and then irradiated with ultrasonic waves having a frequency of 40 kHz for 10 minutes to obtain an extract liquid of anions and cations. Centrifugal separation is then carried out for 10 minutes at 12000 rpm using a high speed centrifugal separator, and the supernatant liquid is collected to obtain a solution of cations and anions. Next, the obtained solution is subjected to mass spectrometry using a liquid chromatography-mass spectrometer.

### Mass Spectrometry Conditions

- Direct injection method
- Injected amount: 2 µL
- Ionization method: electrospraying ionization (ESI)

In addition, after removing methanol from the extract liquid of cations and anions obtained using the procedure described above, a deuterated solution of anions and cations is prepared by dissolving again in deuterated methanol solution, and this deuterated methanol solution is subjected to ¹H-NMR measurements.

### Measurement Conditions

- Frequency: 400 MHz
- Number of accumulations: 32
- Measurement temperature: 25°C

Structures of cations and anions can be specified from the mass spectrometry and ¹H-NMR spectra. Furthermore, in cases where the solution does not contain methanol-soluble components other than the ionic conducting agent, it is possible to determine the total amount of anions and cations contained in the 200 mg sample by measuring the mass of dry product obtained by removing methanol from the solution.

### Additives

The resin layer or the like can contain other components (additives) as long as the advantageous effect of the present disclosure is not impaired.

Examples of additives include surfactants, antioxidants (for example, hindered phenol-based antioxidants, phosphorus-based antioxidants and sulfur-based antioxidants), ultraviolet radiation absorbers, organic pigments, inorganic pigments, pH-adjusting agents, crosslinking agents, compatibilizers, release agents, coupling agents, lubricants, electrically conductive fillers (for example, carbon black, carbon fibers, carbon nanotubes, electrically conductive tin oxide, and electrically conductive mica), and polymeric anti-static agents (for example, polyether amides and polyether ester amides).

In addition, by adding hydrophilic metal oxide particle (silica, titanium oxide, or the like), electrically conductive paths are formed when ions move, meaning that resistance can be significantly lowered. Therefore, the resin layer or the like may contain hydrophilic metal oxide particle (silica, titanium oxide, or the like). It is possible to use one of these additives in isolation or a combination of two or more types thereof. Usage quantities of additives can be specified, as appropriate, and are not particularly limited. The content of hydrophilic metal oxide particle is preferably 0.1 to 10.0 mass%, and more preferably 0.5 to 3.0 mass%, relative to the mass of the resin layer or the like.

In addition, the resin layer or the like may contain a polymeric anti-static agent (for example, a polyetheramide or a polyetheresteramide). The content of the polymeric anti-static agent is preferably 1.0 to 30.0 mass%, and more preferably 5.0 to 20.0 mass%, relative to the mass of the resin layer or the like.

### Surface Layer

An example of a surface layer is a layer which contains a cured product of an active energy ray-curable resin and exhibits excellent abrasion resistance. This type of second layer can be provided by coating a composition containing an active energy ray-curable resin, such as a photocurable resin, on the outer peripheral surface of a base layer and then curing the composition. The thickness of the surface layer is not particularly limited, but is, for example, preferably 1 to 5 µm.

### Back Surface Layer

Examples of the back surface layer include a resin layer for reinforcing the base layer and an electrically conductive layer for imparting electrical conductivity to the inner peripheral surface of the electrophotographic belt. The thickness of the back surface layer is not particularly limited, but is, for example, preferably 0.05 to 10 µm.

Moreover, an explanation will now be given using an electrophotographic belt as an example. Applications of the electrophotographic belt in an electrophotographic image forming apparatus are not particularly limited, but an intermediate transfer belt for holding an unfixed toner image on the outer surface can be advantageously used in, for example, a transfer conveyor belt for holding a recording medium on the outer surface. An electrophotographic member according to one embodiment of the present disclosure can be advantageously used in an intermediate transfer belt.

In addition, in a case where the electrophotographic member is used as an intermediate transfer belt, the surface resistivity ρs, as measured at the outer surface of the resin layer at a temperature of 23°C and a relative humidity of 50%, is preferably 1.0×10⁶ to 9.9×10¹² Ω/□, more preferably 1.0×10⁶ to 1.0×10¹² Ω/□, and still more preferably 1.0×10⁶ to 9.9×10¹⁰ Ω/□.

If the surface resistivity is 1.0×10⁶ Ω/□ or more, a transfer electric field can be more easily attained at the time of secondary transfer, and the occurrence of dots and roughness in an electrophotographic image can be easily prevented. By making the surface resistivity 9.9×10¹² Ω/□ or less, it is not necessary to excessively increase the transfer voltage at the time of secondary transfer and it is possible to better suppress an increase in the size of a power source and an increase in costs. Moreover, depending on conditions at the time of secondary transfer, transfer may be possible even if the surface resistivity falls outside of the range mentioned above, and the surface resistivity of the electrophotographic member is not therefore necessarily limited to the range mentioned above.

### Method for Producing Electrophotographic Member

The resin layer can be formed using an electrically conductive resin composition containing the aromatic ring-containing polyester, fluorosulfonylimide anion and double bond-containing cation (FSI ion conducting agent) described above and, if necessary, other additives (for example, a resin composition obtained by melt kneading these components).

For example, an electrophotographic member having this resin layer can be formed using the method described below. That is, the electrophotographic member can be obtained by pelletizing the resin composition and then forming, for example, a seamless belt using a well-known molding method such as continuous melt extrusion molding, injection molding, stretch blow molding or inflation molding. The electrophotographic member is preferably an electrophotographic belt having the form of an endless belt. In addition, the electrophotographic member can be subjected to a surface treatment, such as coating a treatment agent or a polishing treatment, as mentioned above.

### Electrophotographic Image Forming Apparatus

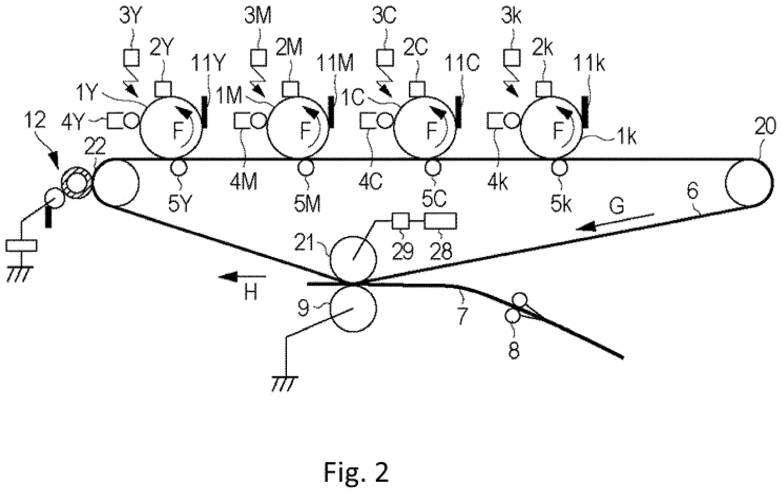

Using FIG. 2, an explanation will now be given of an electrophotographic image forming apparatus (an electrophotographic apparatus) provided with an intermediate transfer member (hereinafter referred to as an intermediate transfer belt) as an electrophotographic member, but the present disclosure is not limited to this embodiment.

The electrophotographic image forming apparatus is preferably one in which the electrophotographic member described above is provided as an intermediate transfer belt. The intermediate transfer belt is a member for secondary transfer to a recording material of a toner image transferred from a photosensitive drum. Moreover, FIG. 2 is a cross-sectional schematic view that illustrates one example of a full color electrophotographic apparatus that uses an electrophotographic process.

This electrophotographic apparatus has a so-called tandem configuration in which electrophotographic stations of multiple colors are disposed in a row in the direction of rotation of an electrophotographic member (an intermediate transfer belt). In the explanations given below, symbols relating to the colors yellow, magenta, cyan and black are given the suffixes Y, M, C and k respectively, but suffixes may be omitted for similar configurations.

In FIG. 2, charging devices 2Y, 2M, 2C and 2k, exposure devices 3Y, 3M, 3C and 3k, developing devices 4Y, 4M, 4C and 4k, and an intermediate transfer belt 6 are disposed around photosensitive drums (photoreceptors, image bearing members) 1Y, 1M, 1C and 1k.

A photosensitive drum 1 is rotated and driven at a prescribed peripheral velocity (process speed) in a direction shown by an arrow F. A charging device 2 charges the peripheral surface of the photosensitive drum 1 to a prescribed polarity and potential (primary charging). As an exposure device 3, a laser beam scanner outputs an on/off modulated laser beam in response to image data inputted from an external device (not shown) such as an image scanner or a computer, and brings about scanning exposure of the charged surface on the photosensitive drum 1. As a result of this scanning exposure, an electrostatic latent image corresponding to the target image data is formed on the surface of the photosensitive drum 1.

The developing devices 4Y, 4M, 4C and 4k house toners of different colors, namely yellow (Y), magenta (M), cyan (C) and black (k). In addition, the developing device 4 to be used is selected on the basis of image data, a developer (toner) is developed on the photosensitive drum 1, and the electrostatic latent image becomes visible as a toner image. In the present embodiment, a reverse development method is used in which development is carried out by causing a toner to adhere to an exposed part of an electrostatic latent image. In addition, the electrophotographic means is constituted from this type of charging device, exposure device and developing device.

The outer peripheral surface of the intermediate transfer belt 6 is disposed so as to be in contact with the surface of the photosensitive drum 1, and the belt is stretched by a plurality of stretching rollers 20, 21 and 22. In addition, the belt rotates in the direction of the arrow G. In the present embodiment, the stretching roller 20 is a tension roller for controlling the tension of the intermediate transfer belt 6 to a constant level, the stretching roller 22 is a roller for driving the intermediate transfer belt 6, and the stretching roller 21 is a counter roller for secondary transfer. In addition, primary transfer rollers 5Y, 5M, 5C and 5k are disposed at primary transfer positions that face the photosensitive drums 1 across the intermediate transfer belt 6.

Colored unfixed toner images formed on the photosensitive drums 1 are sequentially subjected to electrostatic primary transfer on the intermediate transfer belt 6 by applying, to a primary transfer roller 5, a primary transfer bias having a positive polarity that is the reverse polarity from the charging polarity of the toner by means of a constant voltage source or a constant current source. In addition, a full color image is obtained by overlaying the unfixed toner images of the four colors on the intermediate transfer belt 6. The intermediate transfer belt 6 rotates while holding the toner images transferred from the photosensitive drums 1. For every rotation of a photosensitive drum 1 following the primary transfer, untransferred toner on the surfaces of the photosensitive drums 1 are repeatedly cleaned by cleaning devices 11 (11Y, 11M, 11C and 11k), and the process then enters an image formation step.

In addition, a secondary transfer roller (transfer part) 9 is pressed against the toner image-holding surface of the intermediate transfer belt 6 at a secondary transfer position on the intermediate transfer belt 6 that faces the transfer pathway of a recording medium 7. In addition, a counter roller 21, which serves as a counter electrode of the secondary transfer roller 9 and to which a bias is applied, is disposed on the back surface side of the intermediate transfer belt 6 at the secondary transfer position.

When a toner image on the intermediate transfer belt 6 is transferred to the recording medium 7, a bias such as -1000 V to -3000 V, which has the same polarity as the toner, is applied to the counter roller 21 by means of a secondary transfer bias application means 28, and a current of -10 µA to -50 µA flows. At this point, the transfer voltage is detected by a transfer voltage detection means 29. Furthermore, a cleaning device (a belt cleaner) 12 for removing toner remaining on the intermediate transfer belt 6 after the secondary transfer is provided on the downstream side from the secondary transfer position.

The recording medium 7, which has been introduced to the secondary transfer position from a resist roller pair 8, is held and conveyed at the secondary transfer position, and at this point, a constant voltage bias (transfer bias) that is controlled to a prescribed value is applied from the secondary transfer bias application means 28 to the counter roller 21 opposite the secondary transfer roller 9. When the transfer bias having the same polarity as the toner is applied to the counter roller 21, the four-color full color image (toner images), which is obtained by overlapping at the transfer positions on the intermediate transfer belt 6, is transferred all at once to the recording medium 7, and a full color unfixed toner image is formed on the recording material. After receiving the transferred toner image, the recording medium 7 is conveyed from the secondary transfer position in the direction shown by the arrow H, introduced into a fixing unit (not shown), and thermally fixed.

### Examples

The present disclosure will now be explained in greater detail through the use of examples and comparative examples, but the present disclosure is not limited to these.

Measurement methods and evaluation methods will now be explained through the use of examples. Moreover, in these examples, an electrically conductive belt that is an intermediate transfer belt having an endless form was produced as an electrophotographic member.

### Measurement of Surface Resistivity

The surface resistivity of an electrophotographic member was measured in accordance with Japan Industrial Standards (JIS) K6911:2006.

A high resistance meter (product name: Hiresta UP MCP-HT450, produced by Mitsubishi Chemical Analytech Co., Ltd.; main electrode internal diameter: 50 mm, guard ring electrode internal diameter: 53.2 mm, probe external diameter: 57.2 mm (product name: UR-100, produced by Mitsubishi Chemical Analytech Co., Ltd.)) was used as a measurement apparatus. A voltage of 250 V was applied for 10 seconds to an electrophotographic member being measured, and the surface resistivity was measured at four locations in the circumferential direction of the outer surface of the resin layer of this electrophotographic member.

### ρs

The electrophotographic member was left for 12 hours in an environmental test room controlled to a temperature of 23°C and a relative humidity of 50%. Next, the surface resistivity was measured at four locations on the electrophotographic belt in an environment at a temperature of 23°C and a relative humidity of 50% using the measurement method described above, and the arithmetic mean value of this surface resistivity was taken to be ρs (before electrification) and used as an indicator of electrical resistance.

Electrophotographic members obtained in examples and comparative examples were attached as intermediate transfer belts to a transfer unit of a full color electrophotographic apparatus having a configuration shown in FIG. 2 (product name: HP Color Laser Jet CP4025dn, produced by Hewlett-Packard). Next, 200000 solid cyan images were printed in a normal temperature normal humidity environment (a temperature of 25°C and a relative humidity of 55%). The intermediate transfer belt was then removed from the electrophotographic apparatus, and ρs was measured using the same method as that described above, and this value was taken to be ρs (after electrification).

The resistance change rate was defined as ((ρs (after electrification)-ρs (before electrification))/ρs (before electrification)×100, and this was used as an indicator of resistance increase following continuous electrification.

### Image Evaluations

When forming images using the electrophotographic apparatus described above, the 100th solid cyan image formed on an A4 size paper (also referred to as the "initial image in electrification" hereinafter) was observed by eye, and initial image quality in electrification was evaluated.

In addition, the final solid cyan image formed on an A4 size paper (also referred to as the "final image" hereinafter) was observed by eye, and image quality after electrification was evaluated. Observation results were evaluated using the following criteria.
Rank A: No non-uniformity whatsoever observed.
Rank B: Some very slight non-uniformity observed.
Rank C: Non-uniformity observed in approximately 20% of the observed images.
Rank D: Non-uniformity observed in at least half of the observed images.

These evaluation results are shown in Table 5.

### Materials Used for Forming Resin Layers in Examples and Comparative Examples

### Preparation of Ionic Conducting Agent

### Ionic Conducting Agents 1 to 3

The following commercially available products were prepared as ionic conducting agents 1 to 3.

### Ionic conducting agent 1:

1-ethyl-3-methylimidazolium·bis(fluorosulfonyl)imide (produced by Kanto Chemical Co., Inc.)

### Ionic conducting agent 2:

1-butyl-3-methylimidazolium·bis(fluorosulfonyl)imide (produced by Kanto Chemical Co., Inc.)

### Ionic conducting agent 3:

1-octyl-4-methylpyridium·bisfluorosulfonylimide (product name: Elexcel AS-804, produced by Dai-ichi Kogyo Seiyaku Co., Ltd.)

Ionic conducting agent 4: ionic conducting agent 4 was synthesized in accordance with Production Example 1 below.

### Production Example 1: Synthesis of Ionic Conducting Agent 4

50 mL of tetrahydrofuran (THF) (produced by Kanto Chemical Co., Inc.) was added to a round-bottomed flask equipped with a stirrer and a Dimroth condenser, 24.5 g of sodium hydroxide (produced by Kanto Chemical Co., Inc.) was dispersed in the THF, and the round-bottomed flask was cooled using an ice bath. Next, a solution obtained by dissolving 17.0 g of imidazole (produced by Kanto Chemical Co., Inc.) as a nucleophilic agent in 100 mL of THF was added dropwise to the round-bottomed flask. The ice bath was then removed and stirring was carried out for 2 hours at room temperature (23°C).

Next, 121.5 g of 1-bromooctane (produced by Tokyo Chemical Industry Co., Ltd.) was added to the round-bottomed flask as an electrophilic agent, and a reaction was carried out by heating to reflux for 8 hours at a temperature of 70°C. The reaction liquid was filtered, insoluble components were washed with THF, and the solvent in the obtained filtrate was distilled off under reduced pressure. The obtained concentrate was dissolved again in dichloromethane and filtered, the filtrate was recovered, and the dichloromethane was distilled off under reduced pressure. The obtained concentrate was washed with diethyl ether and dried under reduced pressure to obtain a precursor of ionic conducting agent 4.

Next, the full amount of the precursor of ionic conducting agent 4 was dissolved in 100 mL of methanol. While stirring the solution, 54.8 g of potassium N,N-bis(fluorosulfonyl)imide (product name: k-FSI, produced by Mitsubishi Materials Electronic Chemicals Co., Ltd.) dissolved in 100 mL of pure water was added, and stirring was carried out for 24 hours at room temperature. Following a reaction, the methanol was distilled off under reduced pressure, liquid separation was carried out using dichloromethane/water, and an organic layer was recovered. The recovered organic layer was washed twice with pure water, the solvent was distilled off under reduced pressure, and the obtained product was dried to obtain ionic conducting agent 4 as a white powder.

Ionic conducting agent 5: ionic conducting agent 5 was synthesized in accordance with Production Example 2 below.

### Production Example 2: Synthesis of Ionic Conducting Agent 5

5.86 g of 12,13-tetracosanedione (produced by 1717 CheMall Corp.), 0.58 g of para-formaldehyde (produced by Tokyo Chemical Industry Co., Ltd.) and 2.96 g of ammonium acetate (produced by Kanto Chemical Co., Inc.) were placed in a round-bottomed flask equipped with a stirrer and a Dimroth condenser, and these components were dissolved by adding 45.0 mL of ethanol (produced by Kanto Chemical Co., Inc.). 1.0 mL of acetic acid (produced by Tokyo Chemical Industry Co., Ltd.) was then added dropwise. Stirring was then carried out for 4 hours at a temperature of 110°C.

Next, a saturated aqueous solution of sodium bicarbonate was added so that the pH of the obtained reaction liquid became 13. Following the pH adjustment, the reaction liquid was subjected to liquid separation using dichloromethane/water, and an organic layer was recovered. The recovered organic layer was washed twice with pure water, the solvent was distilled off under reduced pressure, and the obtained product was dried to obtain a nucleophilic agent (4,5-diundecylimidazole) as a white powder.

Hereinafter, ionic conducting agent 5 was obtained in the same way as in Production Example 1, except that the nucleophilic agent used in Production Example 1 was replaced by 4,5-diundecylimidazole and the electrophilic agent used in Production Example 1 was replaced by iodomethane (produced by Tokyo Chemical Industry Co., Ltd.).

Materials used for forming resin layers in examples and comparative examples are shown in Tables 1 to 2 below. In addition, specific materials used in examples and comparative examples, and blending quantities thereof, are shown in Table 3 below. Moreover, blending quantities are given as parts by mass unless explicitly stated otherwise.

**Table 1 <Matrix resins>**

| Designation | Name |
|---|---|
| Matrix Resin 1 (aromatic ring-containing polyester) | Polyethylene naphthalate |
| | · Product name: TN-8065S, produced by Teijin Ltd. |
| Matrix Resin 2 (aromatic ring-containing polyester) | Polyethylene terephthalate |
| | · Product name: TRN-8550FF, produced by Teijin Ltd. |
| Matrix Resin 3 (aromatic ring-containing polyester) | Modified polyethylene terephthalate (The molar ratio in total acid monomer units is terephthalic acid: naphthalenedicarboxylic acid= 94: 6) |
| Matrix Resin 4 (aromatic ring-containing polyester) | Polybutylene terephthalate· Product name: Toraycon 1401-X06, produced by Toray Industries, Inc. |
| Matrix Resin 5 (polyester not containing aromatic ring) | Acrylic resin |
| | · Product name: Kurarity LA4285, produced by Kuraray Co., Ltd. |
| Matrix Resin 6 (polyester not containing aromatic ring) | Polylactic acid |
| | · Product name: TE-2000, produced by Unitika Ltd. |

### Synthesis of Matrix Resin 3

A polyethylene terephthalate resin (Homobody, trade name: TRN-8550FF, manufactured by Teijin Ltd.) and polyethylene naphthalate (trade name: TN8065S, manufactured by Teijin Ltd.) were mixed at a molar ratio of 94:6, and the mixture was melt-kneaded at 300°C. to cause an ester exchange reaction between both resins, thereby obtaining a matrix resin 3.

**Table 2 <Ionic conducting agents>**

| Designation | Structural formula | Notes |
|---|---|---|
| Ionic conducting agent 1 (double bond-containing cation) | 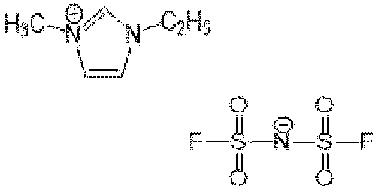 | · Product name: 1-ethyl-3-methylimidazolium· bis(fluorosulfonyl)imide |
| | | · Produced by Kanto Chemical Co., Inc. |
| Ionic conducting agent 2 (double bond-containing cation) | 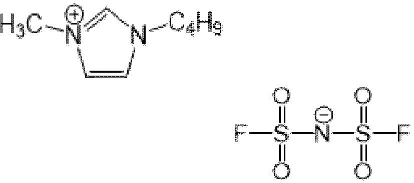 | · Product name: 1-butyl-3-methylimidazolium· bis(fluorosulfonyl)imide |
| | | · Produced by Kanto Chemical Co., Inc. |
| Ionic conducting agent 3 (double bond-containing cation) | 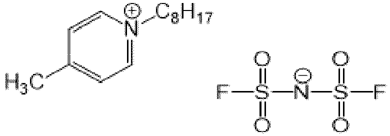 | · Product name: Elexcel AS-804 |
| | | · Produced by Dai-ichi Kogyo Seiyaku Co., Ltd. |
| Ionic conducting agent 4 (double bond-containing cation) | 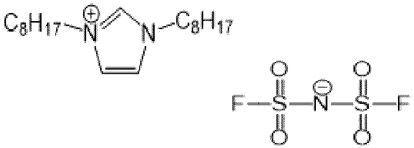 | Production Example 1 |
| Ionic conducting agent 5 (double bond-containing cation) | 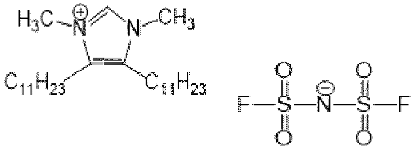 | Production Example 2 |
| Ionic conducting agent 6 (cation not containing double bond) | 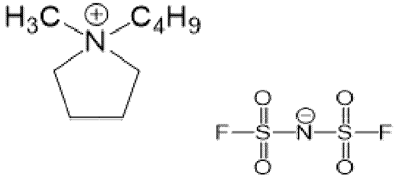 | · Product name: N-butyl-N-methylpyrrolidium· bis(fluorosulfonyl)imide |
| | | · Produced by Kanto Chemical Co., Inc. |

**Table 3 <Other components>**

| Designation | Name |
|---|---|
| Other component 1 (Polymeric anti-static agent) | Polyetheresteramide |
| | · Product name: TPAE-H151, produced by T&K TOKA |
| Other component 2 (Hydrophilic metal oxide particles) | Hydrophilic silica |
| | · Product name: AEROSII, 130, produced by Nippon Aerosil Co. Ltd. |

### Example 1

At blending quantities shown in Table 4, materials shown in Table 4 were melted and mixed using a twin screw kneading extruder (product name: PCM43, produced by Ikegai Corporation) to produce a resin composition.
- Extrusion rate: 6 kg/h
- Rotational speed of screw: 225 rpm
- Barrel control temperature: 270°C

The obtained resin composition was melt extruded under the conditions shown below using a single screw extrusion molding machine (produced by Research Laboratory of Plastics Technology Co., Ltd.) having a spiral cylindrical die (internal diameter: 195 mm, slit width: 1.1 mm) at the distal end thereof to produce a cylindrical film having the size shown below. The thus obtained cylindrical film was taken to be the electrically conductive belt of Example 1.
- Extrusion rate: 6 kg/h
- Die temperature: 290°C
- Size: external diameter 201 mm, thickness 70 µm

Evaluation results for this electrically conductive belt are shown in Table 5 below.

### Examples 2 to 5 and 8 to 14

Electrically conductive belts of Examples 2 to 5 and 8 to 14 were obtained in the same way as in Example 1, except that resin composition formulations were altered as shown in Table 4 below. Evaluation results for these belts are shown in Table 5 below.

### Examples 6 and 7 and Comparative Example 2

Electrically conductive belts shown in Examples 6 and 7 and Comparative Example 2 were obtained in the same way as in Example 1, except that the resin composition formulation was altered as shown in Table 4 below, the barrel control temperature was changed to 240°C, and the die temperature was changed to 260°C. Evaluation results for these belts are shown in Table 5 below.

In Example 6 in which modified polyethylene terephthalate was used as the matrix resin, the electrically conductive belt was not broken due to a decrease in crystallinity.

### Comparative Examples 1 and 3

Electrically conductive belts shown in Comparative Examples 1 and 2 were obtained in the same way as in Example 1, except that the resin composition formulation was altered as shown in Table 4 below, the barrel control temperature was changed to 200°C, and the die temperature was changed to 220°C. Evaluation results for these belts are shown in Table 5 below.

### Example 15

A resin composition was prepared by thermally melt kneading materials at the formulation shown in Table 4 below using a twin-screw extruder (product name: TEX30α, produced by Japan Steel Works, Ltd.). The thermal melt kneading temperature was adjusted so as to fall within the range from 260°C to 280°C, and the thermal melt kneading time was approximately 3 minutes.
The obtained resin composition was pelletized and then dried for 6 hours at a temperature of 140°C.

Next, a preform was produced by supplying these pellets to an injection molding apparatus having a reset cylinder temperature of 300°C (product name: SE180EV-A, produced by Sumitomo Heavy Industries, Ltd.). The injection molding die temperature was 30°C.

The preform was softened by being introduced into a heating apparatus at a temperature of 500°C, and heated at 500°C. Next, the preform was placed in a primary blow molding device. A blown bottle was then obtained by blow molding in a blowing mold using a stretching rod and air force (a blowing air injection part) at a preform temperature of 70°C, an air pressure of 0.3 MPa and a stretching rod speed of 1000 mm/s.

Next, the obtained blown bottle was set in a secondary blow molding apparatus, and a cylindrical nickel die was disposed so as to surround the outer periphery of the blown bottle. An air pressure of 0.1 MPa was then applied inside the bottle, the blown bottle was rotated around the inner surface of the die in such a way that air did not leak to the outside, and the cylindrical die was evenly heated for 60 seconds at 200°C using a heater while rotating the cylindrical die. Next, the cylindrical die was cooled to a normal temperature of 23°C using air, and the pressure applied to the inside of the bottle was released, thereby obtaining a heated blown bottle.

Both ends of the heated blown bottle were cut to obtain a single layer electrically conductive belt including only a resin layer. The obtained electrically conductive belt had a thickness of 70 µm and a circumference of 792.0 mm. Evaluation results for this electrically conductive belt are shown in Table 5 below.

**Table 4**

| | | Matrix resin | | Ionic conducting agent | | Other component | |
|---|---|---|---|---|---|---|---|
| | | No. | Blending quantity (parts by mass) | No. | Blending quantity (parts by mass) | No. | Blending quantity (parts by mass) |
| Example | 1 | 1 | 95.0 | 1 | 5.0 | - | - |
| | 2 | 1 | 95.0 | 2 | 5.0 | - | - |
| | 3 | 1 | 95.0 | 3 | 5.0 | - | - |
| | 4 | 1 | 95.0 | 4 | 5.0 | - | - |
| | 5 | 2 | 95.0 | 3 | 5.0 | - | - |
| | 6 | 3 | 95.0 | 3 | 5.0 | - | - |
| | 7 | 4 | 95.0 | 3 | 5.0 | - | - |
| | 8 | 1 | 99.5 | 1 | 0.5 | - | - |
| | 9 | 1 | 84.5 | 1 | 0.5 | 1 | 15.0 |
| | 10 | 1 | 99.0 | 1 | 1.0 | - | - |
| | 11 | 1 | 90.0 | 1 | 10.0 | - | - |
| | 12 | 1 | 99.0 | 3 | 1.0 | - | - |
| | 13 | 1 | 92.5 | 3 | 7.5 | - | - |
| | 14 | 1 | 97.5 | 1 | 0.5 | 2 | 2.0 |
| | 15 | 1 | 84.5 | 1 | 0.5 | 1 | 15.0 |
| C.E. | 1 | 5 | 95.0 | 5 | 5.0 | - | - |
| | 2 | 4 | 95.0 | 6 | 5.0 | - | - |
| | 3 | 6 | 95.0 | 3 | 5.0 | - | - |

In the Table, C. E. indicates "Comparative Example". Materials shown in Table 3 were used as other component 1 and other component 2.

**Table 5**

| Example No. | ρs (initial) | ρs (after electrification) | Resistance change rate | Initial image quality in electrification | Image quality after electrification |
|---|---|---|---|---|---|
| 1 | 6.3E+09 | 7.9E+09 | 26% | A | A |
| 2 | 1.0E+10 | 1.3E+10 | 26% | A | A |
| 3 | 2.5E+10 | 4.0E+10 | 58% | A | A |
| 4 | 4.0E+10 | 1.3E+11 | 216% | A | A |
| 5 | 3.2E+10 | 5.0E+10 | 58% | A | A |
| 6 | 3.2E+10 | 5.0E+10 | 58% | A | A |
| 7 | 5.0E+10 | 2.0E+11 | 298% | A | A |
| 8 | 7.9E+10 | 1.0E+11 | 26% | A | A |
| 9 | 1.0E+10 | 1.3E+10 | 26% | A | A |
| 10 | 4.0E+10 | 5.0E+10 | 26% | A | A |
| 11 | 2.0E+09 | 2.5E+09 | 26% | A | A |
| 12 | 7.9E+10 | 1.0E+11 | 26% | A | A |
| 13 | 1.6E+10 | 2.0E+10 | 26% | A | A |
| 14 | 4.0E+10 | 5.0E+10 | 26% | A | A |
| 15 | 6.3E+09 | 7.9E+09 | 26% | A | A |
| C.E. 1 | 1.0E+11 | 2.0E+12 | 1895% | A | C |
| C.E. 2 | 6.3E+10 | 3.2E+12 | 4912% | A | C |
| C.E. 3 | 6.3E+10 | 1.6E+12 | 2412% | A | C |

In the tables, for example, 6.3E+09 means 6.3×10⁹, and C. E. indicates "Comparative Example".

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electrophotographic member, wherein
the electrophotographic member comprises a resin layer,
the resin layer is electrically conductive,
the resin layer comprises
an aromatic ring-containing polyester and
a fluorosulfonylimide anion and a double bond-containing cation, and
the aromatic ring-containing polyester is a polyester selected from the group consisting of polyesters of the following (i) to (iv) or a mixture of two or more polyesters selected from the group consisting of polyesters of the following (i) to (iv):
(i) polyethylene naphthalate,
(ii) polyethylene terephthalate,
(iii) modified polyethylene terephthalate in which the proportion of acid monomer unit other than terephthalic acid unit is 6 mol % or less in all acid monomer unit; and,
(iv) modified polyethylene naphthalate in which the proportion of acid monomer unit other than naphthalenedicarboxylic acid unit is 6 mol % or less in all acid monomer unit.

2. The electrophotographic member according to claim 1, wherein the double bond-containing cation has an aromatic heterocyclic structure.

3. The electrophotographic member according to claim 1 or 2, wherein the double bond-containing cation is at least one cation selected from the group consisting of cations represented by formula (2-1) and cations represented by formula (2-2) below: 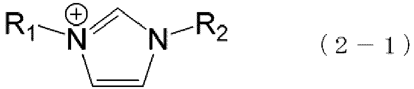 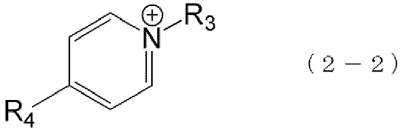 In the formulae, R₁, R₂, R₃ and R₄ each independently denote a hydrogen atom or a hydrocarbon group having 1 to 8 carbon atoms.

4. The electrophotographic member according to claim 3, wherein
In a case where one selected from the group consisting of R₁ and R₂ is a hydrocarbon group having 5 to 8 carbon atoms, the other is a hydrogen atom or a hydrocarbon group having 1 to 4 carbon atoms, and
in a case where one selected from the group consisting of R₃ and R₄ is a hydrocarbon group having 5 to 8 carbon atoms, the other is a hydrogen atom or a hydrocarbon group having 1 to 4 carbon atoms.

5. The electrophotographic member according to claim 3, wherein R₁, R₂, R₃ and R₄ are each independently a hydrocarbon group having 1 to 4 carbon atoms.

6. The electrophotographic member according to any one of claims 1 to 5, wherein the aromatic ring-containing polyester is
(i) the polyethylene naphthalate,
(ii) the polyethylene terephthalate, or
(iii) Modified polyethylene terephthalate wherein the proportion of acid monomer unit other than terephthalic acid unit is 6 mol % or less in all acid monomer unit, and the acid monomer unit other than terephthalic acid unit is isophthalic acid units.

7. The electrophotographic member according to any one of claims 1 to 6, wherein the aromatic ring-containing polyester is the polyethylene naphthalate, or the polyethylene terephthalate.

8. The electrophotographic member according to any one of claims 1 to 7, wherein the sum total of the content of the double bond-containing cation and the content of the fluorosulfonylimide anion in the resin layer is 0.5 to 10.0 mass% relative to the mass of the resin layer.

9. The electrophotographic member according to any one of claims 1 to 8, wherein the surface resistivity ρs, as measured at the outer surface of the resin layer at a temperature of 23°C and a relative humidity of 50%, is 1.0×10⁶ to 1.0×10¹² Ω/□.

10. The electrophotographic member according to any one of claims 1 to 9, wherein the electrophotographic member is an intermediate transfer member.

11. The electrophotographic member according to any one of claims 1 to 10, wherein the electrophotographic member is an electrophotography belt having a form of an endless belt.

12. An electrophotographic image forming apparatus, wherein
the electrophotographic image forming apparatus comprises the electrophotographic member according to any one of claims 1 to 11 as an intermediate transfer member.

13. An electrically conductive resin composition wherein
the electrically conductive resin composition comprises
an aromatic ring-containing polyester and
a fluorosulfonylimide anion and a double bond-containing cation, and
the aromatic ring-containing polyester is a polyester selected from the group consisting of polyesters of the following (i) to (iv) or a mixture of two or more polyesters selected from the group consisting of polyesters of the following (i) to (iv):
(i) Polyethylene naphthalate,
(ii) Polyethylene terephthalate,
(iii) Modified polyethylene terephthalate in which the proportion of acid monomer units other than terephthalic acid units is 6 mol % or less in all acid monomer units; and,
(iv) Modified polyethylene naphthalate in which the proportion of acid monomer units other than naphthalenedicarboxylic acid units is 6 mol % or less in all acid monomer units.
